# EUROPÄISCHE PATENTSCHRIFT

(11) **EP 0 884 209 B1**
(45) Veröffentlichungstag und Bekanntmachung des Hinweises auf die Patenterteilung: **18.10.2000**
(21) Anmeldenummer: 98110301.3
(22) Anmeldetag: 05.06.1998
(51) Int. Cl.: B60J 10/00

(54) **Metallischer Lamellenstreifen, Verfahren zu seiner Herstellung sowie aus ihm hergestelltes Gerüstband**
Metallic lamella-strip, method of making same and support strip prepared therefrom
Bande à lamelles métalliques, son procédé de fabrication et armature préparée à partir de celui-ci

(30) Priorität: 13.06.1997 DE 19725166
(43) Veröffentlichungstag der Anmeldung: 16.12.1998
(73) Patentinhaber: Geissler Stanztechnik GmbH, 82131 Gauting (DE)
(72) Erfinder: Strutz, Gerd, 58332 Schwelm (DE); Geissler, Norbert, 82343 Pöckung (DE)
(74) Vertreter: Grättinger & Partner (GbR)

(56) Entgegenhaltungen:
- EP-A- 0 710 788
- GB-A- 2 052 318
- US-A- 5 302 466
- PATENT ABSTRACTS OF JAPAN vol. 10, no. 73 (M-463) [2130], 22. März 1986 & JP 60 215447 A (TOYODA GOSEI), 28. Oktober 1985

## Beschreibung

Die vorliegende Erfindung betrifft einen metallischen Lamellenstreifen als Zwischenprodukt zur Weiterverarbeitung zu einem Gerüstband mit einem U- oder V-förmigen Querschnitt, das als Skeletteinlage in Dichtungsprofilen, Kantenschutzprofilen oder dgl. dient, mit folgenden Merkmalen: Lamellen mit zwei einander paarweise gegenüberstehenden Lamellenschenkeln erstrecken sich quer zur Längsachse des Lamellenstreifens; jeder Lamellenschenkel ist von den beiden benachbarten Lamellenschenkeln durch einen Trennschnitt getrennt; jede Lamelle ist mit den beiden benachbarten Lamellen über je einen Steg verbunden; ein Mittelschnitt erstreckt sich quer zur Längsrichtung des Lamellenstreifens jeweils über eine Lamelle von einem Lamellenschenkel über die Mitte des Lamellenstreifens in den gegenüberstehenden Lamellenschenkel hinein. Die vorliegende Erfindung betrifft des weiteren ein Verfahren zur Herstellung eines derartigen Lamellenstreifens sowie ein aus dem eingangs genannten Lamellenstreifen durch Profilierung hergestelltes metallisches Gerüstband mit einem U- oder V-förmigen Querschnitt. Die vorliegende Erfindung betrifft schließlich ein Verfahren zur Herstellung eines derartigen Gerüstbandes aus dem eingangs angegebenen Lamellenstreifen.

Ein Lamellenstreifen der eingangs genannten Art sowie ein aus ihm hergestelltes Gerüstband ist aus dem Dokument FR-A-2650648 bekannt. Der Lamellenstreifen besteht dabei aus Stahl. Nach dem Einbringen der Trennschnitte und der Mittelschnitte wird der Lamellenstreifen an den Rändern sowie im Bereich der mittleren Stege durch Kompression gerichtet und gehärtet. In einem dritten Schritt wird dann der Lamellenstreifen in seiner Längsrichtung gereckt, wobei sich die Trennschnitte und die Mittelschnitte öffnen. Alternativ wird ein aus Aluminium hergestellter Lamellenstreifen beschrieben, wobei in diesem Falle anstelle der Trennschnitte und der Mittelschnitte entsprechende Ausschnitte in den Aluminiumstreifen eingestanzt werden und der zweite Schritt der Kompression entfällt.

Die deutsche Offenlegungsschrift 2717837 offenbart ein Gerüstband mit U-förmigem Querschnitt, welches aus einem Lamellenband hervorgegangen ist, bei dem zwei benachbarte Lamellen untereinander jeweils über zwei Stege miteinander verbunden sind. Die Lamellen weisen dabei sickenartige Einprägungen auf, die sich jeweils von einem Ende der jeweiligen Lamelle bis zu dem gegenüberliegenden Ende erstrecken. Die Tiefe der sickenartigen Einprägungen nimmt dabei im Bereich der Lamellenschenkel zu den Rändern des Lamellenstreifens hin ab. In dieser Druckschrift ist auch der Einsatz des Gerüstbandes als Verstärkungseinlage bzw. Skeletteinlage in einem Dichtungs- bzw. Kantenschutzprofil erläutert, so daß an dieser Stelle auf eingehende Ausführungen in dieser Hinsicht verzichtet werden kann.

Verschiedene weitere Gerüstbänder bzw. zu ihrer Herstellung dienende Lamellenstreifen gehen aus der deutschen Offenlegungsschrift 3708889, der europäischen Patentschrift 0416433 und dem deutschen Gebrauchsmuster 8607576 als bekannt hervor. Auch diese Schriften befassen sich mit der Verwendung des Gerüstbandes als Verstärkungseinlage bzw. Skeletteinlage in verschiedenen Dichtungs- bzw. Kantenschutzprofilen.

Bei Kraftfahrzeugen werden Dichtungsprofile, die als Skeletteinlage metallische Gerüstbänder aufweisen, insbesondere im Bereich der Türöffnungen sowie der Kofferraumöffnung eingesetzt. Zur Montage des Dichtungsprofils wird dabei entweder ein Dichtungsprofil, dessen Skeletteinlage seine endgültige Querschnittsform aufweist, auf eine Kante der Karosserie aufgeklemmt; in diesem Falle wird üblicherweise ein Dichtungsprofil mit einem metallischen Gerüstband mit U-förmigem Querschnitt verwendet. Oder aber ein Dichtungsprofil, dessen metallisches Gerüstband einen V-förmigen Querschnitt aufweist, wird auf die entsprechende Kante der Karosserie aufgesetzt, wobei unmittelbar anschließend das Gerüstband durch ein geeignetes Werkzeug zu einem im wesentlichen U-förmigen Querschnitt verformt wird, um eine feste Verbindung zur Karosserie herzustellen. In beiden Fällen ist es wichtig, daß durch die Skeletteinlage eine ausreichende Klemmkraft bereitgestellt wird, um eine dauerhafte Verbindung des Dichtungsprofils mit der Karosserie sicherzustellen.

Die herkömmliche Gestaltung des Gerüstbandes gestattet dabei mehr oder weniger gut, daß das entsprechende Dichtungsprofil der dreidimensionalen Kontur der jeweiligen Öffnung - auch mit relativ kleinen Krümmungsradien - folgen kann. Denn ersichtlich stehen die beiden Bedingungen (hohe Klemmkraft einerseits und gute Verformbarkeit andererseits) in einem Konkurrenzverhältnis zueinander. Hinzu kommt ein weiterer Wunsch der Kraftfahrzeughersteller; nach Möglichkeit soll nämlich das Dichtungsprofil auch stauchbar sein, um bei der Montage Fertigungs- und Montagetoleranzen ausgleichen zu können und ein auf Zehntel eines Millimeters genaues Ablängen des Dichtungs- bzw. Kantenschutzprofils überflüssig zu machen. Auch hier, bei der Stauchbarkeit, besteht i.a. eine Konkurrenz zu der erforderlichen Klemmkraft. Schließlich besteht auch noch ein Konkurrenzverhältnis zwischen der Klemmkraft einerseits und dem Gewicht des entsprechenden Profils andererseits. Letzteres ist nicht unerheblich. Denn in herkömmlichen Personenkraftwagen werden viele Meter des genannten Dichtungsprofils eingebaut. Dies führt bei herkömmlichen Dichtungsprofilen, deren Gerüstband, um eine ausreichende Klemmkraft sicherzustellen im allgemeinen aus 0,5 mm starkem Stahlblech hergestellt ist, zu einem beträchtlichen Gewicht.

Der vorliegenden Erfindung liegt die Aufgabe zugrunde, ein Gerüstband der im Oberbegriff des Anspruchs 7 genannten Art sowie einen zu seiner Herstellung dienenden Lamellenstreifen gemäß dem Oberbegriff von Anspruch 1 sowie entsprechende Herstellungsverfahren zu schaffen, wobei, ohne daß dies nachteilige Auswirkungen auf die Verformbarkeit des entsprechenden Dichtungs- bzw. Kantenschutzprofils hat, das Verhältnis aus Klemmkraft zu Gewicht gegenüber dem gattungsbildenden Stand der Technik gesteigert ist, und wobei zudem das entsprechende Dichtungs- bzw. Kantenschutzprofil stauchbar sein soll.

Gemäß der vorliegenden Erfindung wird diese Aufgabe jeweils durch Merkmale der Ansprüche 1, 7, 8 und 10 gelöst. Bei einem Lamellenstreifen der eingangs genannten Art besteht die Lösung darin, daß jede Lamelle zwei längliche sickenartige Prägungen aufweist, die beidseits des Mittelschnitts angeordnet sind und sich von einem Lamellenschenkel über die Mitte des Lamellenstreifens in den gegenüberstehenden Lamellenschenkel hinein erstrecken, wobei die sickenartigen Prägungen in der Weise mit Abstand zu den Rändern des Lamellenstreifens enden, daß die Lamellenschenkel jeweils einen nichtgeprägten, glatten Endbereich aufweisen. Die vorliegende Erfindung konzentriert sich somit auf die Kombination einer spezifischen Schnittführung einerseits und spezifisch ausgebildeter sickenartiger Prägungen andererseits, wobei sich diese Kombination in einem im Hinblick auf die vorliegende Aufgabenstellung überaus positiven synergistischen Effekt auswirkt. Denn die beidseits des Mittelschnitts jeder Lamelle angeordneten sickenartigen Prägungen führen dazu, daß sich die Mittelschnitte und die Trennschnitte in denjenigen Bereichen, in denen sie und die Prägungen einander überlappen, geringfügig öffnen. Bereits dieses durch das Einbringen der Einprägungen in den vorher eingeschnittenen Blechstreifen verursachte leichte Öffnen der Trennschnitte und der Mittelschnitte reicht aus, um ein Mindestmaß an Stauchbarkeit und Verformbarkeit des fertigen Profils zu gewährleisten, ohne daß es weiterer Maßnahmen bedarf. Des weiteren resultiert das leichte Öffnen der Tennschnitte und der Mittelschnitte in einer ggfs. selbst ohne Haftvermittler oder dgl. ausreichend guten Haftung zwischen dem Gerüstband einerseits und dem Material (Elastomer oder Gummi), mit dem es im Rahmen der Herstellung des Dichtungs- bzw. Kantenschutzprofils umspritzt wird, andererseits. Zugleich resultieren die sickenartigen Prägungen in einer deutlichen Steigerung der Klemmkraft, wobei sie zugleich die Verformbarkeit des Lamellenstreifens sowohl um die Hochachse als auch um die Querachse günstig beeinflussen können. Die Steigerung der Klemmkraft läßt dabei eine Reduktion der Materialstärke und/oder die Auswahl eines leichteren Materials (z.B. Aluminium) zu, so daß sich ein unter Verwendung des erfindungsgemäßen Lamellenstreifens bzw. des erfindungsgemäßen Gerüstbandes hergestelltes Profil bei gleicher Klemmkraft durch ein erheblich geringeres Gewicht auszeichnet als bekannte Profile.

Von maßgeblicher Bedeutung für den vorstehend erläuterten synergistischen Effekt von Schnittführung einerseits und Einprägung andererseits ist, daß sich die sickenartigen Einprägungen nicht bis zu den Rändern des Lamellenstreifens erstrecken, sondern vielmehr mit Abstand zu diesen enden, so daß die Lamellenschenkel jeweils einen nichtgeprägten glatten Endbereich aufweisen. Denn hierdurch wird eine Verkürzung des Lamellenstreifens beim Einbringen der Prägungen unterbunden eben mit dem Ergebnis, daß die Trennschnitte und die Mittelschnitte, wie dargelegt, geringfügig geöffnet werden.

Unter Verwendung des erfindungsgemäßen Gerüstbandes lassen sich nicht nur Dichtungs- bzw. Kantenschutzprofile herstellen, die bei geringem Gewicht einen hohe Klemmkraft sowie eine gute Verformbarkeit aufweisen und stauchbar sind. Zudem genügt die Oberfläche des entsprechenden Dichtungs- bzw. Kantenschutzprofils den hohen ästhetischen Anforderungen der Kraftfahrzeughersteller, denn eine übermäßige Wellung der Oberfläche tritt nicht auf. Auch in diesem Zusammenhang ist von Bedeutung, daß die sickenartigen Prägungen mit Abstand zu den Rändern des Lamellenstreifens enden. Dieses Merkmal wirkt sich im übrigen dahingehend aus, daß aufgrund der glatten scharfkantigen Ausbildung der zugeordneten Ränder des Dichtungs- bzw. Kantenschutzprofils dieses relativ leicht montiert werden kann.

Auch ist für die vorliegende Erfindung bedeutsam, daß zwei benachbarte Lamellen jeweils über einen Steg miteinander verbunden sind, der mehr oder weniger mittig angeordnet ist und von dem zu beiden Seiten die einander gegenüberstehenden Lamellenschenkel abzweigen. Dies ist in gleicher Weise bedeutsam für das weiter oben beschriebene Öffnen der Trennschnitte und der Mittelschnitte beim Einbringen der sickenartigen Prägungen in den Metallstreifen wie auch für die Verformbarkeit des späteren Gerüstbandes. Die Breite der Stege, d.h. der Abstand zwischen den einander gegenüberstehenden Enden der beiden Trennschnitte eines Paares von ihnen ist gemäß einer bevorzugten Weiterbildung der Erfindung so bemessen, daß der Steg bei dem fertigen U-förmig profilierten Gerüststand auf einen Teil des Bogens beschränkt ist. Mit anderen Worten, die Trennschnitte ragen bei dieser Weiterbildung der Erfindung in einem erheblichen Umfang in den Bogen des im Querschnitt U-förmigen Gerüststandes hinein. In diesem Sinn kann sich die Breite des Steges auf etwa 10 - 15 % der Breite des Lamellenstreifens beschränken.

Infolge des gesteigerten Verhältnisses von Klemmkraft zu Gewicht des Dichtungsprofils kann das Gerüstband nach der vorliegenden Erfindung aus einem dünneren Stahlblech hergestellt werden als im Falle des Standes der Technik. So weist ein erfindungsgemäßes Dichtungsprofil, dessen Gerüstband aus einem 0,3 mm starken Stahlblech hergestellt ist, etwa dieselbe Klemmkraft auf wie ein herkömmliches Dichtungsprofil, dessen Gerüstband aus einem 0,5 mm starken Stahlblech hergestellt ist. Ebenso wird es durch Anwendung der vorliegenden Erfindung möglich, das Gerüstband ohne Einbuße an Klemmkraft statt aus Stahlblech aus Aluminiumblech herzustellen. Die mögliche Gewichtseinsparung fällt in diesem Falle noch deutlicher aus als durch Reduzierung der Dicke des Stahlblechs.

Zudem hat die durch die Erfindung mögliche Verwendung von Aluminiumblech zur Herstellung eines den praktischen Anforderungen genügenden Gerüstbandes zwei weitere maßgebliche Vorteile. Zum einen bedarf es nicht, anders als dies für bisher in der Praxis eingesetzte, aus Stahl bestehende Gerüstbänder zutrifft, einer aufwendigen Versiegelung der Stirnseiten des jeweiligen Dichtungs- bzw. Kantenschutzprofils. Denn das aus Aluminium hergestellte Gerüstband nimmt, anders als Stahlblech, bei Kontakt mit Feuchtigkeit keinen Schaden. Zum anderen ist die Rückfederung von Aluminium deutlich geringer als die von Stahl. Dies hat zur Folge, daß im Falle der Montage des Dichtungsprofils unter Verformung des Gerüstbandes von einem V-förmigen Querschnitt zu einem U-förmigen Querschnitt (siehe oben) eine deutlich größere Klemmkraft erzielt werden kann als im Falle von Dichtungsprofilen mit einem herkömmlichen, aus Stahlblech hergestellten Gerüstband.

Eine bevorzugte Weiterbildung der vorliegenden Erfindung zeichnet sich dadurch aus, daß die Erstreckung der sickenartigen Prägungen quer zur Längsachse im wesentlichen der Erstreckung der Mittelschnitte entspricht oder diese lediglich geringfügig übersteigt. In diesem Falle ergibt sich eine besonders günstige gegenseitige Beeinflussung von Mittelschnitten und sickenartigen Prägungen im Sinne des weiter oben erläuterten synergistischen Effekts.

Eine weitere bevorzugte Weiterbildung der Erfindung zeichnet sich dadurch aus, daß im Bereich der randseitigen Enden der Trennschnitte Ausschnitte vorgesehen sind. Besonders zweckmäßig ist es dabei, wenn die - in Richtung der Trennschnitte gemessene - Tiefe der Ausschnitte im wesentlichen der Breite der nicht geprägten, glatten Endbereiche der Lamellen entspricht. Für die Breite der Ausschnitte hat sich ein Wert zwischen etwa 10 % und 15 % der Teilung des Lamellenstreifens (Abstand von Mittelschnitt zu Mittelschnitt) als besonders geeignet erwiesen. Derartige Ausschnitte wirken sich insbesondere dahingehend positiv aus, daß eine Anlage benachbarter Lamellenschenkel im Bereich des Randes des Lamellenstreifens sicher ausgeschlossen ist. Dies wiederum zieht nach sich, daß sich einander benachbarte Lamellenschenkel nicht gegenseitig an der Einnahme einer spannungsfreien Stellung hindern können, in der die glatten Endbereich sämtlicher Lamellenschenkel in einer Ebene liegen. Letztendlich wirkt sich das dahingehend vorteilhaft aus, daß ein nicht gereckter Lamellenstreifen (siehe unten) als Zwischenprodukt aufgerollt, gelagert und zur Weiterverarbeitung versandt werden kann.

Wird demgegenüber darauf verzichtet, im Bereich der randseitigen Enden der Trennschnitte Ausschnitte der vorstehend genannten Art einzubringen, so bietet sich an, den Lamellenstreifen geringfügig zu recken, damit benachbarte Lamellenschenkel einander im Bereich der Ränder nicht gegenseitig behindern. Allerdings ergibt sich in diesem Falle, bedingt durch die Reckung, ein höheres Lager- und Transportvolumen für die zu einem Coil aufgerollten Lamellenstreifen.

Die Stauchbarkeit eines unter Verwendung des erfindungsgemäßen Gerüstbandes hergestellten Dichtungs- bzw. Kantenschutzprofils läßt sich durch eine mehr oder weniger starke Reckung des Lamellenstreifens bzw. des Gerüstbandes vor dem Umspritzen mit Kunststoff bzw. Gummi beeinflussen. Bei einem derartigen Recken werden die Trennschnitte und die Mittelschnitte schlitzartig geöffnet. Dies führt zu einer hervorragenden Stauchbarkeit des unter Verwendung des entsprechenden Gerüstbandes hergestellten Dichtungs- bzw. Kantenschutzprofils bei gleichzeitig geringem Gewicht, guter Materialausnutzung, hoher Oberflächengüte und guter Haftung des Kunststoffmaterials bzw. Gummis des Dichtungs- bzw. Kantenschutzprofils an dem Gerüstband. Ein Recken zwischen 5 % und 20 % wird in den meisten Fällen in dieser Hinsicht sehr gute Ergebnisse liefern. In diesem Zusammenhang ist gemäß einem weiteren Aspekt der vorliegenden Erfindung vorgesehen, daß der - abgesehen von den Prägungen - ebene Lamellenstreifen beim Profilieren zur Erzeugung eines Gerüstbandes mit U-bzw. V-förmigem Querschnitt zugleich in seiner Längsrichtung gereckt wird, wodurch sich die Trennschnitte und die Mittelschnitte weiter öffnen. Ein derartiges Recken des Lamellenstreifens während seines Profilierens läßt sich besonders einfach dadurch erreichen, daß in dem Profilierungswerkzeug von Stufe zu Stufe die Durchmesser der Profilierungswalzen bzw. Profilierungsrollen geringfügig zunehmen, so daß bei gleicher Antriebsdrehzahl sämtlicher Profilierungsrollen und -walzen das fertig profilierte Gerüstband das Profilierungswerkzeug mit einer höheren Geschwindigkeit verläßt als der Lamellenstreifen zugeführt wird. Insbesondere in diesem Zusammenhang (Recken beim Profilieren) ist der weiter oben erläuterte Aspekt zu sehen, wonach durch Einbringen von Ausschnitten im Bereich der randseitigen Enden der Trennschnitte eine Lagerung von nichtgereckten Lamellenstreifen möglich ist.

Im Folgenden wird die Erfindung anhand eines in der Zeichnung dargestellten bevorzugten Ausführungsbeispiels näher erläutert. Es zeigt
- Fig. 1: eine Draufsicht auf den Lamellenstreifen im ungereckten Zustand und
- Fig. 2: eine Draufsicht auf den Lamellenstreifen gemäß Fig. 1 im - übertrieben dargestellten - gereckten Zustand, was zugleich eine Ansicht des in die Zeichnungsebene flachgelegten profilierten Gerüstbandes darstellt.

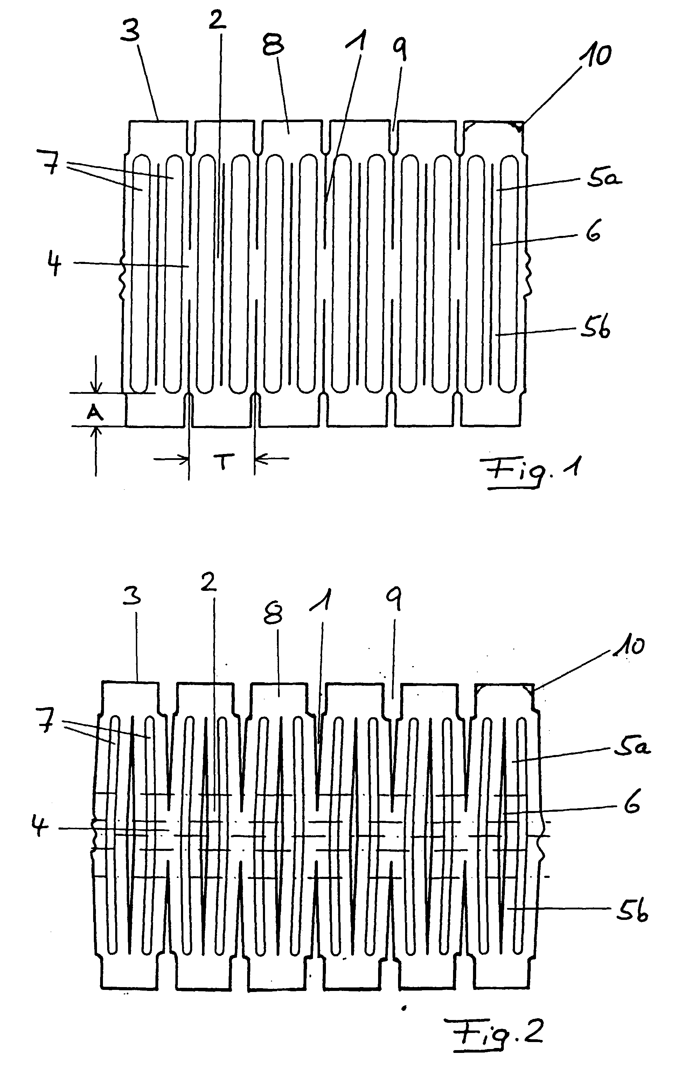

Der in Fig. 1 dargestellte Lamellenstreifen besteht aus einem - abgesehen von sickenartigen Prägungen (siehe unten) - ebenen Metallblech, in dem durch Trennschnitte 1, welche einander paarweise gegenüberstehen und welche einen der Teilung T entsprechenden Abstand zueinander aufweisen, Lamellen 2 ausgebildet sind. Die Trennschnitte 1 erstrecken sich jeweils vom Rand 3 her in den Blechstreifen hinein. Sie enden mit Abstand zu dem gegenüberstehenden Trennschnitt unter Ausbildung eines jeweils zwei benachbarte Lamellen miteinander verbindenden Stegs 4. Die Breite des Stegs beträgt dabei etwa 15 % der Breite des Lamellenstreifens. Jede Lamelle 2 umfaßt zwei einander gegenüberstehende Lamellenschenkel 5a und 5b.

In jede Lamelle 2 ist ein parallel zu den Trennschnitten 1 verlaufender Mittelschnitt 6 eingebracht. Dieser erstreckt sich über etwa 60 - 70 % der Breite des Lamellenstreifens und endet jeweils mit Abstand zu den Rändern 3 des Lamellenstreifens. Darüberhinaus weist jede Lamelle 2 zwei sickenartige Prägungen 7 auf, die zu beiden Seiten des Mittelschnitts 6 der entsprechenden Lamelle 2 angeordnet sind. Die sickenartigen Prägungen 7 erstrecken sich parallel zu den Mittelschnitten 6 über im wesentlichen die gleiche Länge wie oder geringfügig länger als diese. Sie enden somit mit einem Abstand A vor den Rändern 3 des Lamellenstreifens, so daß jeder Lamellenschenkel 5a bzw. 5b einen nichtgeprägten, glatten Endbereich 8 aufweist. Durch das Einbringen der sickenartigen Prägungen 7 in den zuvor durch die Trennschnitte 1 und Mittelschnitte 6 eingeschnittenen Metallstreifen öffnen sich die genannten Schnitte geringfügig, was allerdings in Fig. 1 aus zeichnerischen Gründen nicht dargestellt ist.

Im Bereich der randseitigen Enden der Trennschnitte 1 sind U-förmige Ausschnitte 9 vorgesehen. Deren Tiefe entspricht der Breite A der nichtgeprägten, glatten Endbereiche 8 der Lamellenschenkel. Die Breite der Ausschnitte beläuft sich auf etwa 12 % der Teilung T. Wahlweise gehen die Ausschnitte 9 über eine Abrundung 10 in den entsprechenden Rand 3 des Lamellenstreifens über.

Das aus dem in Fig. 1 dargestellten Lamellenstreifen durch Profilierung und Reckung in Längsrichtung hergestellte Gerüstband ist in Fig. 2 in die Zeichenebene flachgelegt dargestellt. Während des Profilierens des ebenen Lamellenstreifens (Fig. 1) zum U-förmig profilierten Gerüstband wurde der Metallstreifen einer Reckung unterzogen. Hierdurch haben sich die Trennschnitte 1 und die Mittelschnitte 6 wie in Fig. 2 dargestellt schlitzförmig geöffnet.

## Patentansprüche

1. Metallischer Lamellenstreifen als Zwischenprodukt zur Weiterverarbeitung zu einem Gerüstband mit einem U- oder V-förmigen Querschnitt, das als Skeletteinlage in Dichtungsprofilen, Kantenschutzprofilen oder dgl. dient, mit folgenden Merkmalen:
- Lamellen (2) mit zwei einander paarweise gegenüberstehenden Lamellenschenkeln (5a, 5b) erstrecken sich quer zur Längsachse des Lamellenstreifens;
- jeder Lamellenschenkel (5a, 5b) ist von den beiden benachbarten Lamellenschenkeln durch je einen Trennschnitt (1) getrennt;
- jede Lamelle (2) ist mit den beiden benachbarten Lamellen über je einen Steg (4) verbunden;
- ein Mittelschnitt (6) erstreckt sich quer zur Längsrichtung des Lamellenstreifens jeweils über eine Lamelle (2) von einem Lamellenschenkel (5a) über die Mitte des Lamellenstreifens in den gegenüberstehenden Lamellenschenkel (5b) hinein;
gekennzeichnet durch die folgenden Merkmale:
- jede Lamelle (2) weist zwei längliche sickenartige Prägungen (7) auf, die beidseits des Mittelschnitts (6) angeordnet sind und sich von einem Lamellenschenkel (5a) über die Mitte des Lamellenstreifens in den gegenüberstehenden Lamellenschenkel (5b) hinein erstrecken;
- die sickenartigen Prägungen (7) enden in der Weise mit Abstand (A) zu den Rändern (3) des Lamellenstreifens, daß die Lamellenschenkel (5a, 5b) jeweils einen nicht geprägten, glatten Endbereich (8) aufweisen.

2. Metallischer Lamellenstreifen nach Anspruch 1,
dadurch gekennzeichnet,
daß die Erstreckung der sickenartigen Prägungen (7) im wesentlichen der Erstreckung der Mittelschnitte (6) entspricht oder geringfügig größer ist als diese.

3. Metallischer Lamellenstreifen nach einem der Ansprüche 1 oder 2,
dadurch gekennzeichnet,
daß im Bereich der randseiteigen Enden der Trennschnitte (1) Ausschnitte (9) vorgesehen sind.

4. Metallischer Lamellenstreifen nach Anspruch 3,
dadurch gekennzeichnet,
daß die Tiefe der Ausschnitte (9) im wesentlichen der Breite (A) der nicht geprägten, glatten Endbereiche (8) der Lamellenschenkel (5a, 5b) entspricht.

5. Metallischer Lamellenstreifen nach Anspruch 3 oder Anspruch 4,
dadurch gekennzeichnet,
daß die Breite der Ausschnitte (9) zwischen 10 % und 15 % der Teilung (T) des Lamellenstreifens beträgt.

6. Metallischer Lamellenstreifen nach einem der Ansprüche 3 bis 5,
dadurch gekennzeichnet,
daß die Ausschnitte (9) unter einer Abrundung (10) in den entsprechenden Rand (3) übergehen.

7. Metallisches Gerüstband mit einem U- oder V-förmigen Querschnitt als Skeletteinlage in Dichtungsprofilen, Kantenschutzprofilen oder dgl. mit folgenden Merkmalen:
- Lamellen (2) mit zwei einander paarweise gegenüberstehenden Lamellenschenkeln (5a, 5b) erstrecken sich quer zur Längsachse des Lamellenstreifens;
- jeder Lamellenschenkel (5a, 5b) ist von den beiden benachbarten Lamellenschenkeln durch einen durch Reckung des Gerüstbandes in seiner Längsrichtung geöffneten Trennschnitt (1) getrennt;
- jede Lamelle (2) ist mit den beiden benachbarten Lamellen über je einen Steg (4) verbunden;
- ein durch Reckung des Gerüstbandes in seiner Längsrichtung geöffneter Mittelschnitt (6) erstreckt sich quer zur Längsrichtung des Lamellenstreifens jeweils über eine Lamelle (2) von einem Lamellenschenkel (5a) über die Mitte des Lamellenstreifens in den gegenüberstehenden Lamellenschenkel (5b) hinein;
gekennzeichnet durch die folgenden Merkmale:
- jede Lamelle (2) weist zwei längliche sickenartige Prägungen (7) auf, die beidseits des Mittelschnitts (6) angeordnet sind und sich von einem Lamellenschenkel (5a) über die Mitte des Gerüstbandes in den gegenüberstehenden Lamellenschenkel (5b) hinein erstrecken;
- die sickenartigen Prägungen enden in der Weise mit Abstand (A) zu den Rändern (3) des Gerüstbandes, daß die Lamellenschenkel (5a, 5b) jeweils einen nicht geprägten, glatten Endbereich (8) aufweisen.

8. Verfahren zu Herstellung eines Lamellenstreifens nach Anspruch 1, wobei in einen Metallblechstreifen zunächst in einem ersten Schritt die einander paarweise gegenüberstehenden Trennschnitte (1) und jeweils zwischen zwei Paaren von Trennschnitten die Mittelschnitte (6) eingebracht werden und wobei anschließend in einem zweiten Schritt in jede durch zwei benachbarte Paare von Trennschnitten (1) definierte Lamelle (2) zwei längliche sickenartige Prägungen (7) eingeformt werden, die beidseits des Mittelschnitts (6) angeordnet sind und sich von einem Lamellenschenkel (5a) über die Mitte des Metallblechstreifens in den gegenüberstehenden Lamellenschenkel (5b) hinein erstrecken.

9. Verfahren nach Anspruch 8 zur Herstellung eines Lamellenstreifens nach Anspruch 3, wobei die Ausschnitte (9) vor der Ausformung der sickenartigen Prägungen (7) in den Metallblechstreifen eingebracht werden.

10. Verfahren zur Herstellung eines Gerüstbandes nach Anspruch 7 aus einem Lamellenstreifen nach einem der Ansprüche 1 bis 6, wobei der Lamellenstreifen beim Profilieren zur Erzeugung des U- bzw- V-förmigen Querschnitts zugleich in seiner Längsrichtung gereckt wird, um die Trennschnitte (1) und die Mittelschnitte (6) zu öffnen.

## Claims

1. Metallic lamella strip as an intermediate product for further processing into a framework band with a U-shaped or V-shaped cross-section, which serves as a reinforcement insert for sealing profiles, edge protection profiles, or the like, with the following characteristics:
- lamellae (2) with two lamella shanks (5a, 5b) that stand opposite one another in pairs extend crosswise to the longitudinal axis of the lamella strip;
- each lamella shank (5a, 5b) is separated from the two adjacent lamella shanks by a separating cut (1);
- each lamella (2) is connected with the two adjacent lamellae via a bridge (4), in each instance;
- a center cut (6) extends crosswise to the longitudinal direction of the lamella strip, over one lamella (2) in each instance, from one lamella shank (5a) over the center of the lamella strip into the opposite lamella shank (5b);
characterized by the following features:
- each lamella (2) has two oblong bead-like stamp marks (7), which are arranged on both sides of the center cut (6), and extend from one lamella shank (5a) over the center of the lamella strip into the opposite lamella shank (5b);
- the bead-like stamp marks (7) end at a distance (A) from the edges (3) of the lamella strip, in such a way that the lamella shanks (5a, 5b) have a non-stamped, smooth end region (8), in each instance.

2. Metallic lamella strip according to Claim 1,
characterized in that
the expanse of the bead-like stamp marks (7) essentially corresponds to the expanse of the center cuts (6), or is slightly greater.

3. Metallic lamella strip according to one of Claims 1 or 2,
characterized in that
cut-outs (9) are provided in the region of the edge-side ends of the separating cuts (1).

4. Metallic lamella strip according to Claim 3,
characterized in that
the depth of the cut-outs (9) essentially corresponds to the width (A) of the non-stamped, smooth end regions (8) of the lamella shanks (5a, 5b).

5. Metallic lamella strip according to Claim 3 or Claim 4,
characterized in that
the width of the cut-outs (9) is between 10% and 15% of the division (T) of the lamella strip.

6. Metallic lamella strip according to one of Claims 3 to 5,
characterized in that
the cut-outs (9) make a transition into the corresponding edge (3) via a rounded part (10).

7. A metallic framework band with a U-shaped or V-shaped cross-section as a reinforcement insert in sealing profiles, edge protection profiles, or the like, with the following characteristics:
- lamellae (2) with two lamella shanks (5a, 5b) that stand opposite one another in pairs extend crosswise to the longitudinal axis of the lamella strip;
- each lamella shank (5a, 5b) is separated from the two adjacent lamella shanks by a separating cut (1) that has been opened in its longitudinal direction by stretching;
- each lamella (2) is connected with the two adjacent lamellae via a bridge (4), in each instance;
- a center cut (6) which has been opened in its longitudinal direction by stretching the framework band extends crosswise to the longitudinal direction of the lamella strip, over one lamella (2) in each instance, from one lamella shank (5a) over the center of the lamella strip into the opposite lamella shank (5b);
characterized by the following features:
- each lamella (2) has two oblong bead-like stamp marks (7), which are arranged on both sides of the center cut (6), and extend from one lamella shank (5a) over the center of the lamella strip into the opposite lamella shank (5b);
- the bead-like stamp marks end at a distance (A) from the edges (3) of the lamella strip, in such a way that the lamella shanks (5a, 5b) have a non-stamped, smooth end region (8), in each instance.

8. Process for the production of a lamella strip according to Claim 1, where in a first step, the two separating cuts (1) that lie opposite one another in pairs is made in a strip of sheet metal, and the center cuts (6) which lie between two pairs of separating cuts, in each instance, are made, and subsequently, in a second step, two oblong bead-like stamp marks (7) are formed in each lamella (2) defined by two adjacent pairs of separating cuts (1), which are arranged on both sides of the center cut (6), and extend from one lamella shank (5a) over the center of the sheet metall strip into the opposite lamella shank (5b).

9. Process according to Claim 8 for the production of a lamella strip according to Claim 3, where the cut-outs (9) are made in the sheet metal strip before the bead-like stamp marks (7) are formed.

10. Process for the production of a framework band according to Claim 7 from a lamella strip according to one of Claims 1 to 6, where the lamella strip is simultaneously stretched in its longitudinal direction during profiling to produce the U-shaped or V-shaped cross-section, in order to open up the separating cuts (1) and the center cuts (6).

## Revendications

1. Bande à lamelles métallique, en tant que produit semi-fini destiné à être transformé en une bande de renfort à section transversale en forme de U ou de V, servant d'armature dans des profilés d'étanchéité, des profilés de protection des arêtes ou similaires, présentant les caractéristiques suivantes:
- des lamelles (2) comportant deux branches (5a, 5b) disposées en vis-à-vis par paire s'étendent transversalement à l'axe longitudinal de la bande à lamelles;
- chaque branche de lamelle (5a, 5b) est séparée des deux branches de lamelle voisines par un trait de coupe de séparation (1);
- chaque lamelle (2) est liée chaque fois aux deux lamelles voisines par un cordon (4);
- un trait de coupe médian (6) s'étend transversalement à la direction longitudinale de la bande à lamelles, sur chaque lamelle (2), d'une branche de lamelle (5a) à la branche de lamelle (5b) en vis-à-vis en passant par le milieu de la bande à lamelles;
caractérisé par les caractéristiques suivantes:
- chaque lamelle (2) comporte deux moulures (7) embouties allongées qui sont disposées de part et d'autre du trait de coupe médian (6) et s'étendent d'une branche de lamelle (5a) à la branche de lamelle (5b) en vis-à-vis en passant par le milieu de la bande à lamelles;
- les moulures (7) embouties se terminent à une distance (A) des bords (3) de la bande à lamelles, telle que les branches de lamelles (5a, 5b) présentent une partie d'extrémité (8) lisse, non emboutie.

2. Bande à lamelles métallique selon la revendication 1, caractérisée en ce que la longueur des moulures (7) embouties correspond essentiellement à la longueur des traits de coupe médians (6) ou est légèrement supérieure à celle-ci.

3. Bande à lamelles métallique selon une des revendications 1 ou 2, caractérisée en ce que des encoches (9) sont prévues dans la région des extrémités, côté bord, des traits de coupe de séparation (1).

4. Bande à lamelles métallique selon la revendication 3, caractérisée en ce que la profondeur des encoches (9) correspond essentiellement à la largeur (A) des parties d'extrémité (8) lisses, non embouties, des branches de lamelles (5a, 5b).

5. Bande à lamelles métallique selon la revendication 3 ou 4, caractérisée en ce que la largeur des encoches (9) est de 10 et 15% du pas de division (T) de la bande à lamelles.

6. Bande à lamelles métallique selon une des revendications 3 à 5 caractérisée en ce que les encoches (9) se raccordent au bord (3) concerné par un arrondi (10).

7. Bande de renfort métallique à section transversale en U ou en V servant d'armature dans des profilés d'étanchéité, des profilés de protection des arêtes ou similaires :
- des lamelles (2) comportant deux branches (5a, 5b) disposées en vis-à-vis par paire s'étendent transversalement à l'axe longitudinal de la bande à lamelles;
- chaque branche de lamelle (5a, 5b) est séparée des deux branches de lamelle voisines par un trait de coupe de séparation (1) ouvert par étirage de la bande de renfort dans sa direction longitudinale;
- chaque lamelle (2) est liée chaque fois aux deux lamelles voisines par un cordon (4);
- un trait de coupe médian (6) ouvert par étirage de la bande de renfort dans sa direction longitudinale s'étend transversalement à la direction longitudinale de la bande à lamelles, sur chaque lamelle (2), d'une branche de lamelle (5a) à la branche de lamelle (5b) en vis-à-vis, en passant par le milieu de la bande de renfort;
caractérisé par les caractéristiques suivantes:
- chaque lamelle (2) comporte deux moulures (7) embouties, allongée, qui sont disposées de part et d'autre du trait de coupe médian (6) et s'étendent d'une branche de lamelle (5a) à la branche de lamelle (5b) en vis-à-vis en passant par le milieu de la bande de renfort;
- les moulures (7) embouties se terminent à une distance (A) des bords (3) de la bande de renfort, telle que les branches de lamelles (5a, 5b) présentent une partie d'extrémité (8) lisse, non emboutie.

8. Procédé de fabrication, d'un bande à lamelles selon la revendication 1, selon lequel, dans une bande de tôle métallique, on réalise au cours d'une première étape les traits de coupe de séparation (1) en vis-à-vis par paire et chaque fois entre deux paires de traits de coupe de séparation, le trait de coupe médian (6), puis au cours d'une deuxième étape on réalise dans chacune des lamelles (2) définies par deux paires de traits de coupe de séparation (1) voisines, deux moulures (7) embouties allongées qui sont disposées de part et d'autre du trait de coupe médian (6) et s'étendent d'une branche de lamelle (5a) à la branche de lamelle (5b) en vis-à-vis en passant par le milieu de la bande de tôle métallique.

9. Procédé de fabrication d'une bande de renfort selon la revendication 3, selon lequel les encoches (9) sont réalisées dans la bande de tôle métallique avant la formation des déformations (7) en forme de moulures.

10. Procédé de fabrication d'une bande de renfort selon la revendication 7, à partir d'une bande à lamelles selon une des revendications 1 à 6, selon lequel, au cours de l'opération de profilage pour former la section transversale en U ou en V, on étire simultanément la bande à lamelles dans sa direction longitudinale afin d'ouvrir les traits de coupe de séparation (1) et les traits de coupe médians (6).
